# EUROPEAN PATENT APPLICATION

(11) **EP 3 034 423 A1**
(43) Date of publication of application: **22.06.2016**
(21) Application number: 14199158.8
(22) Date of filing: 19.12.2014
(51) Int. Cl.: B65D 19/38, B29C 51/00, B29C 70/06

(54) **A pallet made from recycled and recyclable materials and method for manufacturing the same**

(71) Applicant: Fibreuse nv, 2600 Berchem (BE)
(72) Inventor: Sels, Jesse, 2630 Aartselaar (BE); Naets, Sylvain, 2600 Antwerpen (BE); Galle, Rudy, 9750 Zingem (BE)
(74) Representative: BiiP cvba

(57) **Abstract**

The present invention is directed to a pallet at least partially made of a nonwoven composite material, said nonwoven composite material comprising:
- unravelled natural fibers and/or glass fibers, and
- Plastic fibers.

In addition, the present invention is directed to a process for manufacturing a pallet comprising mixing unravelled natural fibers and/or glass fibers, and plastic fibers, and thermoforming said mix into a nonwoven composite material layer.

It should be clear that the present invention is not only applied to any type of pallets, but also to any other type of load carriers such as boxes, cases, crates and the like.

## Description

### FIELD OF THE INVENTION

The present invention relates to a pallet at least partially made of a nonwoven composite material.

In addition, the present invention relates to a process for manufacturing a pallet at least partially made of nonwoven composite material layer.

### BACKGROUND

In the context of the present invention, a pallet is a flat transport structure that supports goods in a stable fashion while being lifted by a forklift, pallet jack, front loader, work saver or other jacking device. A pallet is the structural foundation of a unit load which allows handling and storage efficiencies.

Conventional pallets are wooden, but can also be made of plastic, metal, paper, and recycled materials, depending on the field of use.

In particular in the use of recycled materials for pallets, many attempts are being made aiming to lower environmental impact. For example TW201113197 relates to a method for manufacturing an environmentally friendly pallet wherein agriculture waste or waste woods are fiberized and blended with waste paper slurry and crunched waste plastic. Subsequently, this blend is injection molded into a pallet.

However, it is commonly known that injection molding is a rather expensive technique for producing relatively simple designs at relatively low volumes.

Another example is BE901742 wherein industrial waste material, is used to produce single-use non-returnable transport pallets, crates, etc. the waste materials combined are waste plastics and files production items, waste cardboard from damaged or used boxes, bobbins, and waste wood from templates, reject pallets, or garden prunings and cellulose fibers are shredded and mixed. Then a dry adhesive bonding compound is added, the mixture heated and fed to a press to produce the pallets. However, a clear drawback is the fact that the pallets are only intended for single use and do not have the characteristics required for several use cycles as for example in a pallet a pooling system.

It is therefore an object of the present invention to provide a pallet having the characteristics required for being used in multiple use cycles, e.g. in a pallet pooling system, and in heavy duty applications. Impact strength, swell, heat resistance, heat retardancy, dimensional stability, water absorbance, or racking capability may be at least comparable with or improved versus conventional pallets.

In another object of the present invention a pallet is provided having impact strength and load characteristics comparable with the characteristics of conventional wooden pallets, such combined with significantly lower weight, resulting in significantly decreasing transport costs.

Another object of the present invention is to provide a pallet made of recyclable and/or recycled materials.

Further, it is an object of the present invention to provide an improved method for manufacturing pallets allowing using recycled and recyclable materials.

Further, the present invention provides a process allowing using porous, hydroscopic, visco-elastic raw materials as a base material in the manufacturing of durable, reusable, and dimensionally stable pallets.

### SUMMARY OF THE INVENTION

The present invention is directed to a pallet at least partially made of a nonwoven composite material, said nonwoven composite material comprising:
- unravelled natural fibers and/or glass fibers, and
- Plastic fibers.

In addition, the present invention is directed to a process for manufacturing a pallet comprising mixing unravelled natural fibers and/or glass fibers, and plastic fibers, and thermoforming said mix into a nonwoven composite material layer.

It should be clear that the present invention is not only applied to any type of pallets, but also to any other type of load carriers such as boxes, cases, crates, and the like.

### DETAILED DESCRIPTION

In an embodiment in accordance with the present invention, a pallet at least partially made of a nonwoven composite material is provided, said nonwoven composite material comprising:
- unravelled natural fibers and/or glass fibers, and
- Plastic fibers.

In the context of the present invention, the raw natural materials such as jute, hemp, cocos, etc are treated by a bast fibre opening machine or tearing machine to be unravelled to fiber stage. The unravelled natural fibers may comprise any natural fiber as for example jute, flax, hemp, sisal, coco, or bamboo, or animal fibers.

Alternatively, or in combination with natural fibers also glass fibers may be used.

The most important types of natural fibres used in pallets according to the present invention are flax, hemp, jute, kenaf, cocos and sisal due to their properties and availability. Using jute fiber has many advantages. Firstly it has wood like characteristics as it is a bast fibre. Jute has high specific properties, low density, less abrasive behaviour to the processing equipment, good dimensional stability and harmlessness.. The fiber has a high aspect ratio, high strength to weight ratio, and has good insulation properties. Jute is a low cost eco-friendly product and is abundantly available, easy to transport.

In the context of the present invention, the plastic fibers may be freshly produced fibers or may originate from any type of waste or recycled plastic fiber sheet material, such as textile, fabric, carpet, clothing, or big bags (i.e. flexible intermediate bulk containers (FIBC)). In case of recycled plastic fibers, they may be obtained by unravelling or tearing, and optionally subsequently combing, recycled plastic fiber material, woven and non-woven. The plastic fiber material may be of any type of plastic used in the production of plastic fiber materials, woven or nonwoven, as for example polypropylene fibers, polyvinyl fibers, polyethylene fibers, polyester fibers, etc.

In an embodiment in accordance with the present invention, a pallet is provided comprising at least 40%weight at least 50%weight, or at least 60%weight, or at least 80%weight, or at least 90%weight of unravelled natural fibers and/or glass fibers.

In another embodiment in accordance with the present invention, a pallet is provided comprising less than 60%weight, or less than 50%weight, or less than 40%weight, or less than 20%weight or less than 10%weight, or less than 5% of plastic fibers.

Without being bound by any theory, it is believed that using unravelled fibers as described above results in nonwoven composite material having a netting structure embedded in a plastic matrix, providing a pallet in accordance with the present invention the characteristics required for being used in multiple use cycles, e.g. in a pallet pooling system. For example impact strength, racking capability, swelling (i.e.water absorbance) and heat resistance during wash cycles are important characteristics.

Further, impact strength and load characteristics may be comparable with the characteristics of conventional wooden pallets, such combined with significantly lower weight, resulting in significantly decreasing transport costs. For example, a typical wooden pallet weighing 20-25 kg may be replaced by a pallet weighing less than 15 kg, or even less than 12kg.

Another benefit is that these pallets are made of recyclable and/or recycled materials.

A pallet in accordance with the present invention may further comprise a thermoharder. Such thermoharder may be any type of thermoharder material allowing mixing with a blend of unravelled natural fibers and/or glass fibers, and plastic fibers. Such thermoharder may be in powder form or in liquid form, for example a polyester-based powder, or an epoxy-based powder or liquid, or a formaldehyde-based powder or liquid, or polyurethane liquid resin, or a water glass based binder as described in WO2013079635 herewith incorporated by reference.

Using a thermoharder may result in strengthening the plastic fiber matrix and may enhance the formation of even more durable and rigid nonwoven composite material structure.

A pallet in accordance with the present invention may comprise less than 50%weight or, less than 25%weight, or less than 20%weight or less than 10%weight, or less than 5% of said thermoharder.

In a particular embodiment of the present invention, a pallet may comprise between 40 and 90%weight unravelled natural fibers and/or glass fibers, between 40 and 5%weight plastic fibers, and between 40 and 5%weight thermoharder.

In another particular embodiment of the present invention, a pallet may comprise between 50 and 75%weight unravelled natural fibers and/or glass fibers, between 10 and 40%weight plastic fibers and between 10 and 40%weight thermoharder.

In another particular embodiment of the present invention, a pallet may comprise between 50% and 75%weight unravelled natural fibers and/or glass fibers, 15 and 40%weight plastic fibers, and between 10 and 30%weight thermoharder.

In addition, a pallet of the present invention may further comprise bi-component fibers, preferably less than 25%weight, or less than 20%weight or less than 10%weight, or less than 5%weight.

Bi-component fibers are manufactured from two different polymers by spinning and joining them in a simultaneous process from one spinneret, resulting for example in a fiber having a polyethyleneterefthalate core and a polypropylene outer layer.

In the context of the present invention, the bi-component fibers may be made of two components having a melting point of at least 80°C, or at least 110°C for the outer layer, and at least 140°C or at least 170°C for the core.

Without being bound by any theory, it is believed that because of the fact that the core fiber due it's high melting point is kept intact during processing and is mixed with the unraveled natural fibers and/or glass fibers, whereas the outer layer becomes part of the plastic matrix, an even more strong and rigid structure may be obtained.

In addition, a pallet according to the present invention may be at least partially made of nonwoven composite material board, said nonwoven composite material board made of a mono-layer of thermoformed and pressed nonwoven composite material, or made of a multilayer of thermoformed nonwoven composite material layers pressed onto each other.

Alternatively, within a multilayer of nonwoven composite material layers several monolayers may be alternated with layers of alternative materials.

A pallet according to the present invention may be at least partially made of nonwoven composite material board having at one or more sides an outer layer treated for painting or other finishing steps.

Further, a pallet according to the present invention may be at least partially made of nonwoven composite material board having at one or more sides one or more finishing layers, such as for example coating layers.

Further, the present invention provided a process for manufacturing a pallet comprising mixing unravelled natural fibers and/or glass fibers, and plastic fibers, and thermoforming said mix into a nonwoven composite material layer.

In the context of the present invention, thermoforming may be any type of thermoforming suitable for composite board formation (e.g. heat pressing, moulding, vacuum molding, etc), and may comprise any type of heating having the capacity to sufficiently raise the temperature within the core of the composite material mix during thermoforming, such as for example steam heating or steam injection heating or microwave heating or air heating (i.e. blowing hot air over and/or through the material).

The temperature within the core of the composite material mix during thermoforming may be at least 100°C, or at least 120°C, or even at least 140°C.

A process according to the present invention may comprises mixing between 40 and 90%weight unravelled natural fibers and/or glass fibers, and between 10 and 60%weight plastic fibers.

Though natural fibers such as jute etc are porous, hydroscopic, visco-elastic materials, a process according to the present invention enables its use as a base material in the manufacturing of durable and re-usable pallets.

The plastic fibers may have a melting point of at least 100°C, or at least 120°C, or even at least 140°C, such that during thermoforming the unravelled natural fibers (or the glass fibers) become sufficiently embedded within a plastic melt.

In a particular embodiment of the present invention, between 40 and 90%weight unravelled natural fibers and/or glass fibers, between 40 and 5%weight plastic fibers, and between 40 and 5%weight thermoharder may be mixed.

In another particular embodiment of the present invention, between 50 and 75%weight unravelled natural fibers and/or glass fibers, between 10 and 40%weight plastic fibers and between 10 and 40%weight thermoharder may be mixed.

The natural or glass fibers, and the plastic fibers may be blended by any conventional technique suitable for mixing fibers, preferably by an airlay machine Optionally, needle punching may be used, which is a technique wherein mechanical interlocking of the fibers is achieved by means of thousands of barbed felting needles repeatedly passing into and out of the fiber mix.

The unravelled natural fibers and/or glass fibers and/or the plastic fibers may not be shredded, milled of treated by any other technique with the purpose of decreasing the fibre length as compared to the unraveled natural fiber length or the original plastic fiber length.

The fiber length may be at least 0,5cm, or at least 0.7cm, or preferably at least 1 cm in order to obtain a desired netting structure. In case the fibers are mixed by means of needle punching, the fibre length is preferably at least 1.2cm, or even more preferred at least 1.5cm.

The thermoharder may be mixed with the unravelled natural fibers and/or glass fibers, and the plastic fibers, by any type of conventional technique for mixing a powder into a blend of fibers, for example by means of airblowing or spreading onto the fiber layer. Alternatively in case of a liquid thermoharder, spraying or immersing may be used, for example a needle-punched material layer may be immersed in a bath of liquid thermoharder.

Subsequently to thermoforming the nonwoven composite material layer may be cold pressed, thereby forming a mono-layer nonwoven composite material board. Cold pressing may have the advantage of relaxing the nonwoven composite material board in order to decrease breaking risk. Alternatively, also heat pressing, or vacuum forming may be used.

Another alternative is that the step of thermoforming may comprise immediate heat pressing or vacuum forming the nonwoven composite material layer into a mono-layer nonwoven composite material board.

In an embodiment of the present invention, a process for manufacturing a pallet may further comprise mixing bi-component fibers within the fiber mix.

In a preferred embodiment of the present invention, a process for manufacturing a pallet is provided comprising thermoforming a plurality of nonwoven composite material layers and connecting them by pressing or vacuum forming, thereby forming a multilayer nonwoven composite material board. Alternatively, within a multilayer of nonwoven composite material layers several monolayers may be alternated with layers of alternative materials.

A mono- or multilayer of composite material board may then further proceed to sawing or cutting into a plurality of elongated composite material boards for being connected into a pallet structure.

The elongated composite materials boards may be glued or nailed to each other or onto block elements as for example used in block pallets.

A process for manufacturing a pallet according to the present invention may further comprise a finishing treatment onto one or more sides of the nonwoven composite board material, for example coating, painting, waxing, etc.

Alternatively such process may further comprise providing one or more finishing layers and pressing said one or more finishing layers onto one or more sides of the nonwoven composite board material. Such finishing layer may be for example a coating layer.

In an embodiment of the present invention, a particular process for manufacturing a pallet is provided comprising:
- mixing unravelled natural fibers and/or glass fibers, plastic fibers, and thermoharder powder
- Pre-heating the mix in pre-heating mould
- transporting to pre-heated fiber layer into a steam injection oven, thereby forming a nonwoven composite material layer
- cold pressing the nonwoven composite material layer
- pressing several nonwoven composite material layers onto each other thereby forming a multilayer nonwoven composite board
- sawing/cutting the multilayer nonwoven composite board into elongated boards
- nailing the elongated boards onto block elements.

In another embodiment of the present invention, an alternative process for manufacturing a pallet is provided comprising:
- mixing unravelled natural fibers and/or glass fibers, and plastic fibers by needle punching, resulting in a provisional non-woven composite fiber mat.
- sprinkling thermoharder liquid onto this composite fiber mat, or immersing the mat into a thermoharder liquid bath
- heat pressing the immersed mat into a nonwoven composite material layer
- pressing several nonwoven composite material layers onto each other thereby forming a multilayer nonwoven composite board
- sawing/cutting the multilayer nonwoven composite board into elongated boards
- nailing the elongated boards onto block elements.

## Claims

1. A pallet at least partially made of a nonwoven composite material, said nonwoven composite material comprising:
- unravelled natural fibers and/or glass fibers, and
- Plastic fibers.

2. A pallet according to claim 1, comprising at least 40%weight at least 50%weight, or at least 60%weight, or at least 80%weight, or at least 90%weight of unravelled natural fibers and/or glass fibers.

3. A pallet according to claims 1 to 2, comprising less than 60%weight, or less than 50%weight, or less than 40%weight, or less than 20%weight or less than 10%weight, or less than 5% of plastic fibers.

4. A pallet according claims 1 to 3, further comprising a thermoharder.

5. A pallet according to claim 4, comprising less than 50%weight or, less than 25%weight, or less than 20%weight or less than 10%weight, or less than 5% of thermoharder.

6. A pallet according to claim 5, comprising between 50 and 75%weight unravelled natural fibers and/or glass fibers, between 10 and 40%weight plastic fibers and between 10 and 40%weight thermoharder.

7. A pallet according to claims 1 to 6 wherein the nonwoven composite material further comprises bi-component fibers.

8. Process for manufacturing a pallet comprising mixing unravelled natural fibers and/or glass fibers, and plastic fibers, and thermoforming said mix into a nonwoven composite material layer.

9. Process for manufacturing a pallet according to claim 8, wherein thermoforming comprises steam heating or steam injection heating or microwave heating or air heating.

10. Process for manufacturing a pallet according to claims 8 or 9, wherein between 40 and 90%weight unravelled natural fibers and/or glass fibers, between 10 and 60%weight plastic fibers are mixed.

11. A Process for manufacturing a pallet according to claims 8 to 10, wherein between 40 and 90%weight unravelled natural fibers and/or glass fibers, between 40 and 5%weight plastic fibers, and between 40 and 5%weight thermoharder are mixed.

12. A Process for manufacturing a pallet according to claims 8 to 11 wherein the step of mixing is performed by means of an airlay machine.

13. A Process for manufacturing a pallet according to claims 8 to 12 wherein the step of mixing comprises needle punching.

14. Process for manufacturing a pallet according to claims 8 to 13, wherein subsequently to thermoforming the nonwoven composite material layer is cold pressed, heat pressed, or vacuum formed, thereby forming a mono-layer nonwoven composite material board.

15. Process for manufacturing a pallet according to claims 8 to 14, comprising thermoforming a plurality of nonwoven composite material layers and connecting them by pressing or vacuum forming, thereby forming a multilayer nonwoven composite material board.
